(19) **Europäisches Patentamt**
**European Patent Office**
**Office européen des brevets**

(11) **EP 2 071 894 B1**

(12) **EUROPEAN PATENT SPECIFICATION**

(45) Date of publication and mention
of the grant of the patent:
**27.03.2019 Bulletin 2019/13**

(51) Int Cl.:
***H04W 28/16*** *(2009.01)*  ***H04W 72/04*** *(2009.01)*
***H04W 28/26*** *(2009.01)*

(21) Application number: **08160101.5**

(22) Date of filing: **10.07.2008**

(54) **Resource management system and method based on radio resource usage**

Ressourcenverwaltungssystem und -verfahren auf Grundlage der Verwendung von Funkressourcen

Système de gestion de ressources et procédé basé sur l'utilisation de ressources radio

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.11.2007 KR 20070122795**

(43) Date of publication of application:
**17.06.2009 Bulletin 2009/25**

(73) Proprietors:
• **Electronics and Telecommunications Research Institute**
**Yuseong-gu**
**Daejeon-si (KR)**
• **Samsung Electronics Co., Ltd.**
**Suwon-si, Gyeonggi-do, 443-742 (KR)**

(72) Inventors:
• **Kim, Soo-chang**
**Daejeon-si (KR)**
• **Shin, Yeon-seung**
**Daejeon-si (KR)**

• **Kim, Yeong-jin**
**Daejeon-si (KR)**

(74) Representative: **HGF Limited**
**Saviour House**
**9 St. Saviourgate**
**York YO1 8NQ (GB)**

(56) References cited:
**EP-A- 1 367 783**  **EP-A- 1 780 959**
**WO-A-2005/089003**  **GB-A- 2 355 890**
**US-A1- 2003 037 146**  **US-A1- 2003 206 537**

• **CHI-CHAO CHAO ET AL: "Connection admission control for mobile multiple-class personal communications networks" COMMUNICATIONS, 1997. ICC '97 MONTREAL, TOWARDS THE KNOWLEDGE MILLENNI UM. 1997 IEEE INTERNATIONAL CONFERENCE ON MONTREAL, QUE., CANADA 8-12 JUNE 1997, NEW YORK, NY, USA,IEEE, US, vol. 1, 8 June 1997 (1997-06-08), pages 391-395, XP010227047 ISBN: 978-0-7803-3925-5**

EP 2 071 894 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### BACKGROUND OF THE INVENTION

### FIELD OF THE INVENTION

The present invention relates to a resource management system and method based on radio resource usage, and more particularly, to a resource management technique of a base station for normal calls and handover calls.

This work was partly supported by the IT R&D program of MIC/IITA [2005-S-404-23, Project Name: Development of 3G Evolution Access System].

### DESCRIPTION OF THE RELATED ART

The 3rd Generation Partnership Project (3GPP) is being standardized as 3G LTE (Long-Term Evolution) to achieve low latency and high data rate which are more excellent than in the existing 3GPP GSM system.

In order to satisfy high data rate and low latency required by 3G LTE, a 3G LTE base station system integrates/divides a NodeB function of existing 3GPP R6 and some functions of an existing Radio Network Controller (RNC) to implement eNodeB (Evolved-Node B), and adds some functions of 3GPP RNC and some functions of SGSN/GGSN to configure an ePC (an evolved-Packet Core), thereby reducing the number of nodes that configure the system and simplifying an interface,

Standardization of the 3G LTE is underway. Accordingly, the present applicant has proposed a radio resource management technique for improving quality of service (QoS) and efficiently using radio resources by performing radio resource management based on the 3G LTE structure through a simple and effective control method.

PCT Patent Application WO 2005089003 (A1) relates to a terminal device and to a scheduling method and device for scheduling data transmission over a plurality of channels in a data network. A predetermined parameter, e.g. a TFC value, indicating a channel capacity in a received data stream of at least one of the plurality of channels is monitored, and a request for change of the maximum channel capacity allocated to the at least one of the plurality of channels is determined, if the value the monitored predetermined parameter falls outside a predetermined allowed range. The terminal device is configured to set a predetermined parameter indicating a channel capacity to a value outside the predetermined allowed range in order to request a change of the maximum channel capacity.; Thereby, an explicit capacity request signaling from the data source to the scheduling functionality can be avoided without introducing additional latency, and physical layer resources can be increased for improved data transmission.

In the paper "Connection Admission Control for Mobile Multiple-Class Personal Communications Network", International Conference on Communication, Montreal QUE., Canada June 8-12, 1997, Chi-Chao Chao et al investigate the connection admission control problem in mobile personal communications networks. In contrast to other studies on this aspect which either focused only on single-class call connections or ignored user mobility, the study directly addresses the connection admission control for multiple-class class with user mobility. A generic class of coordinate-convex admission control policies is considered. An efficient numerical method is proposed to derive the connection-level quality of service (QoS) and is verified with computer simulation results. The proposed analysis may be employed in a network design tool for studying the admission control policy and selecting system parameters to satisfy the required connection-level QoS.

US Patent Application US 2003037146 (A1) describes how combined session and resource tracking in a mobile node (MN) and/or basestation in a dynamic network resource environment can be used to control reactions to resource shortages. The session that is to experience a resource shortage is detected either by the MN, or communicated to the MN where session signaling is used to modify the session according to MN and basestation policy/configuration. The basestation can alternatively modify the session itself with all the session peers, on behalf of the MN, The specific new reaction to resource shortages that is then enabled is to place the session on hold such that the resources are freed, but so that the session state is maintained in the peers.; This is preferable to dropping the session, as is generally the case in dynamic environments, if the likely period of resource loss is short and the session modifications require less overhead than restarting the session when the resources return after dropping the session. In addition, before having resources removed, the basestation can provide the MN with an opportunity to upgrade the priority of its resource request compared to other users in the cell, so that a resource auction is conducted to decide which MN actually loses its resources.

US Patent application US 20030206537 (A1) describes a call admission control method and apparatus in a mobile communication network including a plurality of cells. In the call admission control apparatus, a receiver receives a call setup request for a call, a first decider decides the type of the call. Call types are classified into a new call and a handoff call. A second decider decides whether the call satisfies a predetermined condition corresponding to the call type and admitting the call if the call satisfies the condition.

### SUMMARY OF THE INVENTION

The present invention is defined in the independent claims. The dependent claims define particular embodiments of the invention.

The present invention provides a radio resource management system and method which allow a base station to effectively manage radio resources.

The present invention further provides a method of managing radio resources for each base station cell, using present information about radio resources received from a MAC layer which performs scheduling for the radio resources.

Therefore, it is possible to improve quality of service (QoS) and efficiently use radio resources through effective resource management based on radio resource usage.

Additional aspects of the invention will be set forth in the description which follows, and in part will be apparent from the description, or may be learned by practice of the invention.

It is to be understood that both the foregoing general description and the following detailed description are exemplary and explanatory and are intended to provide further explanation of the invention as claimed. It is however noted that the embodiments and/or examples of the following description which are not covered by the appended claims are considered as not being part of the present invention.

BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the aspects of the invention.

FIG. 1 is a block diagram of a resource management system based on radio resource usage, according to an embodiment of the present invention;

FIG. 2 is a flowchart of a resource management method, according to an embodiment of the present invention, which is performed by the resource management system illustrated in FIG. 1;

FIG. 3 is a flowchart of a method for calculating the amount of available radio resources, according to an embodiment of the present invention;

FIG. 4 is a view for explaining the flow of data which is received or transmitted for call admission and resource allocation;

FIG. 5 is a view for explaining the flow of data which is received or transmitted for call release and resource return; and

FIG. 6 is a view for explaining the flow of data which is transmitted or received to obtain present information about available radio resources.

DETAILED DESCRIPTION OF EXEMPLARY EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art, the scope of the invention being defined by the appended claims. In the drawings, the size and relative sizes of layers and regions may be exaggerated for clarity. The reference numerals in the drawings denote the corresponding elements.

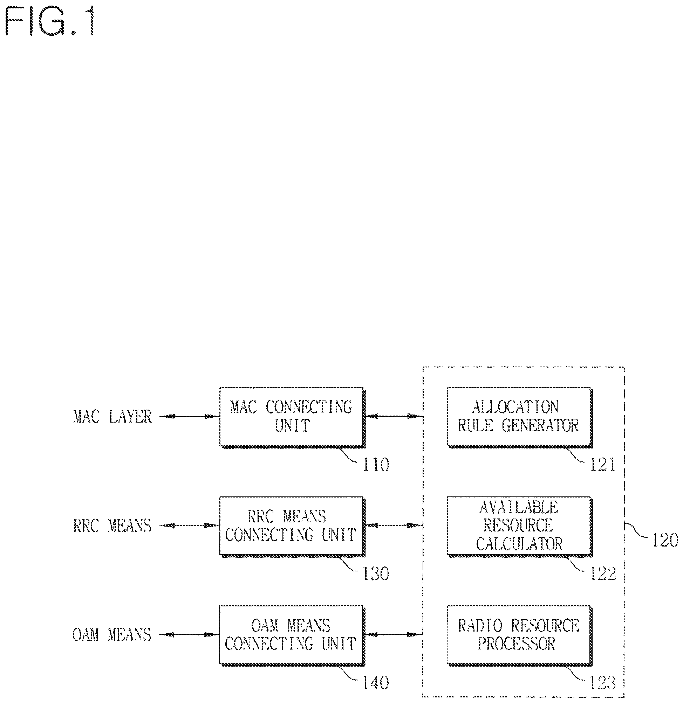

FIG. 1 is a block diagram of a resource management system based on radio resource usage, according to an embodiment of the present invention. As illustrated in FIG. 1, the resource management system 100 is installed in a base station of a mobile communication system in the form of software, hardware or a combination thereof, and includes a MAC connecting unit 110 and a radio resource management unit 120.

The MAC connecting unit 110 receives present information about the radio resource status from a MAC layer which performs scheduling for the radio resources. Here, the radio resources status may be physical resource blocks (PRBs) or resource units of a physical layer.

The radio resource management unit 120 manages radio resources for each base station cell, on the basis of the present information about radio resource status received from the MAC connecting unit 110.

That is, in the current embodiment of the present invention, the resource management system 100 receives present information about PRBs from a MAC layer, which is Layer 2 of OSI-7, calculates the amount of available radio resources on the basis of the present information about PRBs and a total amount of radio resources (PRB_Tot), and thus performs call admission and resource allocation on the basis of the amount of available radio resources, so that radio resources can be effectively and easily managed and used and QoS can be enhanced.

In detail, the radio resource management unit 120 includes an allocation rule generator 121, an available resource calculator 122, and a radio resource processor 123.

The allocation rule generator 121 sets a group of PRBs required for a VoIP call to "1", and sets resources corresponding to N VoIP calls to normal calls and resources corresponding to N+M VoIP calls to handover calls, in the range of the number of capable calls. Here, the allocation rule generator 121 generates a resource allocation rule which defines a total amount of radio resources (PRB_Tot), an amount of radio resources (PRB_New) that are to be allocated to normal calls within the total amount of radio resources (PRB_Tot), and an amount of radio resources (PRB_HO) that are to be allocated to handover calls within the total amount of radio resources (PRB_Tot).

For example, the amount of radio resources (PRB_New) that are to be allocated to normal calls can be allocated to N VoIP calls, and the amount of radio resources (PRB_HO) that are to be allocated to handover calls can be allocated to N+M VoIP calls.

When a call request is received, the available resource calculator 122 calculates an amount of available radio resources (PRB_Avail), by subtracting a product of an amount of occupied radio resources (PRB Alloc) that are to be allocated to a terminal and the number P of terminals capable of being serviced simultaneously in a transmission time interval (TTI), from the total amount of radio resources (PRB_Tot).

$$PRB\_Avail = PRB\_Tot - PRB\_Alloc \times P$$

The radio resource processor 123 allocates or returns radio resources below a maximum number N for normal calls, and allocates or returns radio resources below a maximum number N+M for handover calls, in the range of the amount of available radio resources (PRB_Avail) calculated by the available resource calculator 122.

The radio resource processor 123 compares an amount of radio resources (PRB_Req) requested by the call with the amount of available radio resources (PRB_Avail), compares the requested amount of radio resources (PRB_Req) with the amount of radio resources (PRB_New) that are to be allocated to normal calls if the requested amount of radio resources (PRB_Req) is less than the amount of available radio resources (PRB_Avail), performs call admission and resource allocation for a normal call on the call if the request amount of radio resources (PRB_Req) is less than the amount of radio resources (PRB_New) that are to be allocated to normal calls, and subtracts the amount of radio resources allocated to the call from the amount of available radio resources (PRB_Avail), to thus update the amount of available radio resources (PRB_Avail).

That is, the current embodiment of the present invention is for radio resource management for a normal call, and the radio resource processor 123 compares the amount of radio resources (PRB_Req) requested by a call with the amount of available radio resources (PRB_Avail) calculated by the available resource calculator 122.

If the requested amount of radio resources (PRB_Req) is more than the amount of available radio resources (PRB_Avail), allocation of radio resources is impossible, and thus the radio resource processor 123 rejects call admission and resource allocation for a normal call.

If the requested amount of radio resources (PRB_Req) is less than the amount of available radio resources (PRB_Avail), allocation of radio resources is possible. However, if the call is a handover call which is generated by base station switching, the handover call has to be processed differently from a normal call.

The radio resource processor 123 compares the requested amount of radio resources (PRB_Req) with the amount of radio resources (PRB_New) that are to be allocated to normal calls. If the requested amount of radio resources (PRB_Req) is less than the amount of radio resources (PRB_New) that are to be allocated to normal calls, the radio resource processor 123 determines that a normal call requests call admission and resource allocation, and thus accepts call admission and resource allocation for a normal call.

Meanwhile, according to another embodiment of the present invention, if the requested amount of radio resources (PRB_Req) is more than the amount of radio resources (PRB_New) that are to be allocated to normal calls, the radio resource processor 123 determines whether the call is a handover call, and compares the requested amount of radio resources (PRB_Req) with the amount of radio resources (PRB_HO) that are to be allocated to handover calls if the call is a handover call.

If the requested amount of radio resources (PRB_Req) is less than the amount of radio resources (PRB_HO) that are to be allocated to handover calls, the radio resource processor 123 performs call admission and resource allocation for a handover call, subtracts the amount of radio resources allocated to the call from the amount of available radio resources (PRB_Avail), and thus updates the amount of available radio resources (PRB_Avail).

That is, the current embodiment of the present invention is for radio resource management for a handover call. If the requested amount of radio resources (PRB_Req) is more than the amount of radio resources (PRB_New) that are to be allocated to normal calls, the radio resource processor 123 determines whether the call is a handover call, and rejects call admission and resource allocation if the call is not a handover call, because the call is neither a normal call nor a handover call.

If the call is a handover call, the radio resource processor 123 compares the requested amount of radio resources (PRB_Req) with the amount of radio resources (PRB_HO) that are to be allocated to handover calls.

If the requested amount of radio resources (PRB_Req) is more than the amount of radio resources (PRB_HO) that are to be allocated to handover calls, allocation of radio resources is impossible, and thus the radio resource processor 123 rejects call admission and resource allocation.

If the requested amount of radio resources (PRB_Req) is less than the amount of radio resources (PRB_HO) that are to be allocated to handover calls, allocation of radio resources to a handover call is possible, and thus the radio resource processor 123 accepts call admission and resource allocation for a handover call.

Accordingly, the radio resource management system 100 receives the present information about the allocated amount of radio resources (PRB_Alloc) from a MAC layer which is a Layer 2 of OSI-7, and calculates an amount of available radio resources on the basis of the present information about the allocated amount of radio resources (PRB_Alloc) and a total amount of radio resources (PRB_Tot), to thus determine whether or not to perform call admission and resource allocation for a normal call or a handover call, so that radio resources can be effectively and easily managed and used and QoS can be enhanced.

Meanwhile, according to another embodiment of the present invention, the radio resource processor 123 can determine whether present information about the amount of available radio resources satisfies QoS requested by the call before performing call admission and resource allocation for a normal call or a handover call, to finally determine whether to perform the call admission and resource allocation for the normal call or handover call according to the result of the determination.

In the current embodiment of the present invention, when a call requesting call admission and resource allocation is received, the radio resource processor 123 requests QoS information, and determines whether QoS requested by the call is satisfied when all conditions required for call admission and resource allocation are satisfied, accepts call admission and resource allocation if the QoS is satisfied, and rejects call admission and resource allocation if the QoS is not satisfied, thereby further improving QoS through simple, effective resource management.

Meanwhile, according to another embodiment of the present invention, when a call release is requested, the radio resource processor 123 performs a call release for a normal call or a handover call, returns radio resources allocated to the call, adds the returned amount of radio resources to the amount of available radio resources (PRB_Avail), and thus updates the amount of available radio resources (PRB__Avail).

That is, the current embodiment of the present invention is for performing a call release for a normal call or a handover call and returning radio resources allocated to the normal or handover call. When a call release is requested, the radio resource processor 123 processes a call release for a normal call or a handover call considering the call as the normal call or handover call, returns resources allocated to the normal or handover call, adds the returned amount of radio resources to the amount of available radio resources (PRB_Avail) to update the amount of available radio resources (PRB_Avail), thereby further improving QoS through simple, effective resource management.

Meanwhile, according to another embodiment of the present invention, the resource management system 100 can further include an Radio Resource Control (RRC) means connecting unit 130. The RRC means connecting unit 130 receives a call admission request or a call release request for a normal call or a handover call, from an RRC means which performs processing for a normal call or a handover call, and transmits call results in response to the call admission request or the call release request.

That is, in the current embodiment of the present invention, by implementing the resource management system 100 separately from an RRC means which performs processing for a normal call or a handover call, when a call admission request or a call release request for a normal call or a handover call is received through the RRC means connecting unit 130, the resource management system 100 performs processing of call admission and resource allocation or processing of call release and resource return, and transmits the processing results to the RRC means, so that the RRC means can perform appropriate processing for the normal call or handover call according to the processing results received from the resource management system 100.

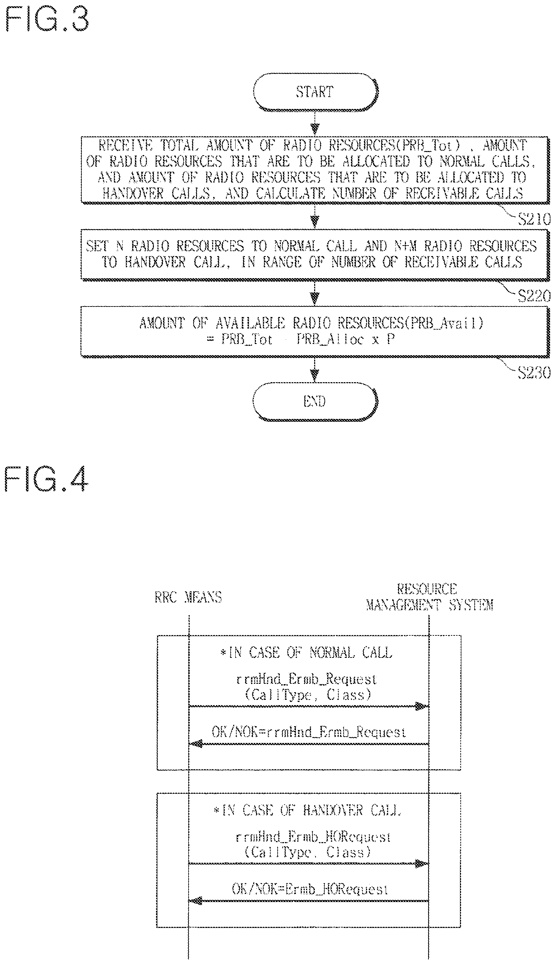

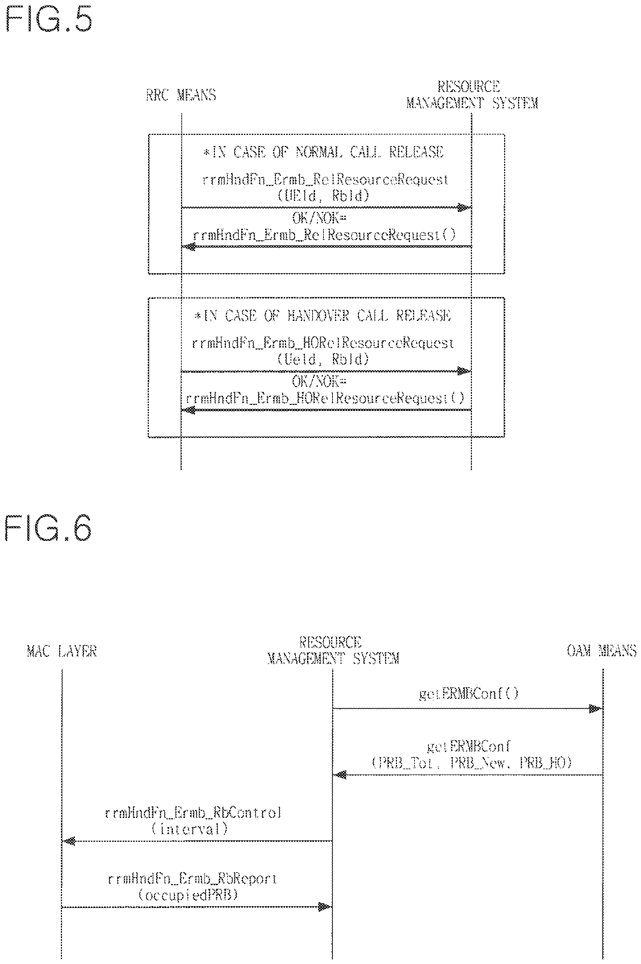

FIG. 4 is a view for explaining the flow of data which is received or transmitted between the RRC means and the resource management system for call admission and resource allocation. FIG. 5 is a view for explaining the flow of data which is received or transmitted between the RRC means and the resource management system for call release and resource return.

In FIG. 4, "rrmHnd_Ermb_Request" represents a call admission request message for a normal call, "OK/NOK" represents a response message for the call admission request message, "rrmHnd_Ermb_HORequest" represents a call admission request message for a handover call, and "OK/NOK" represents a response message for the call admission request message. In FIG. 5, "rrmHndFn_Ermb_RelResourceRequest" represents a call release request message for a normal call, "OK/NOK" represents a response message for the call release request message, "rrmHndFn_Ermb_HORelResourceRequest" represents a call release request message for a handover call, and "OK/NOK" represents a response message for the call release request message.

Meanwhile, according to another embodiment of the present invention, the resource management system 100 can further include an Operation, Administration and Maintenance (OAM) means connecting unit 140. The QAM means connecting unit 140 receives information required for an initial operation for resource management control, including information about the total amount of radio resources (PRB_Tot), the amount of radio resources (PRB_New) that are to be allocated to normal calls, and the amount of radio resources (PRB_HO) that are to be allocated to handover calls, from the OAM means which defines a standard for providing functions for operations/maintenance/repair of a communication network.

That is, the current embodiment of the present invention is for obtaining information about the total amount of radio resources (PRB_Tot), the amount of radio resources (PRB_New) that are to be allocated to normal calls, and the amount of radio resources (PRB_HO) that are to be allocated to handover calls, from the QAM means which defines a standard for providing functions for operations/maintenance/repair of a communication network, in order to obtain information about the amount of available radio resources,

FIG. 6 is a view for explaining the flow of data which is transmitted or received among the resource management system, the OAM means, and the MAC layer, in order to obtain information about the amount of available radio resources. In FIG. 6, "getERMBConf() represents a function through which the resource management system obtains information required to calculate the amount of available radio resources from the OAM means, "rrmHndFn_Ermb_RbControl" represents a message requesting reporting of the current state of PRBs, and "rrmHndFn_Ermb_RbReport" represents a message reporting the current state of PRBs.

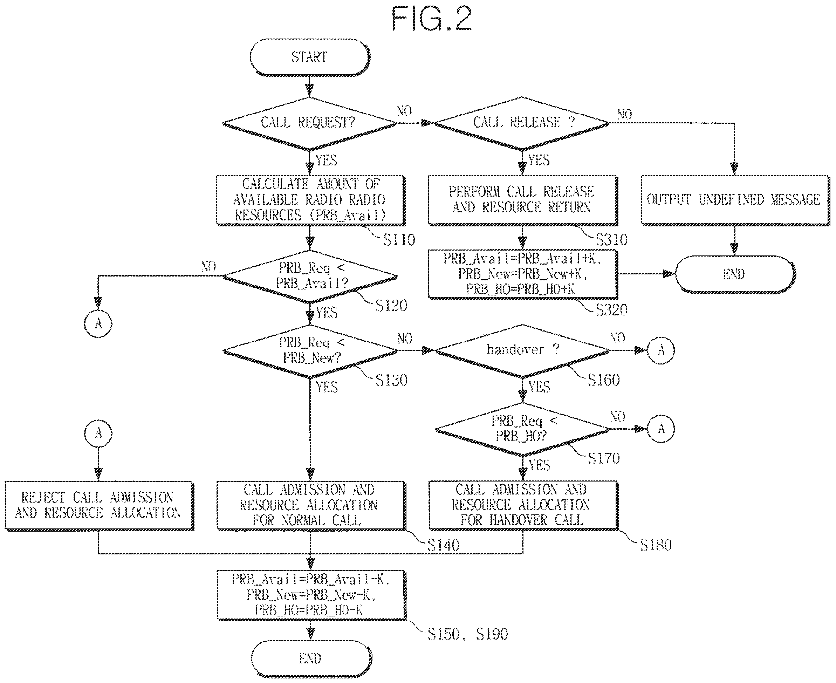

Hereinafter, a resource management method of the resource management system configured as explained above will be described with reference to FIGS. 2 and 3. FIG. 2 is a flowchart of a resource management method according to an embodiment of the present invention, which is performed by the resource management system illustrated in FIG. 1, and FIG. 3 is a flowchart of a method for calculating the amount of available radio resources, according to an embodiment of the present invention.

First, in operation S110, when a call request occurs, the resource management system subtracts a product of an amount of radio resources that are to be allocated to each terminal and the number (P) of terminals capable of being serviced simultaneously in a transmission time interval (TTI), from a total amount of radio resources (PRB_Tot), to obtain an amount of available radio resources (PRB_Avail).

In detail, the amount of available radio resources (PRB_Avail) can be calculated by the following operation, in operation S110.

Referring to FIG. 3, in operation S210, the resource management system receives a total amount of radio resources (PRB_Tot), an amount of radio resources (PRB_New) that are to be allocated to normal calls, and an amount of radio resources (PRB_HO) that are to be allocated to handover calls, from an OAM means, and calculates the number of receivable calls on the basis of the received information.

Then, in operation S220, the resource management system sets N resources to normal calls and N+M resources to handover calls the range of the number of receivable calls calculated in operation S210.

Then, in operation S230, the resource management system subtracts a product of the amount of radio resources (PRB Alloc) that are to be allocated to each terminal and the number (P) of terminals capable of being serviced simultaneously in a Transmission Time Interval (TTI), from the total amount of radio resources (PRB_Tot), and calculates the amount of available radio resources (PRB_Avail).

The operation S110 can be performed periodically or in response to a request from the resource management system.

Meanwhile, if the amount of available resources (PRB_Avail) is calculated in operation S110, the resource management system allocates or returns radio resources below a maximum number N for normal calls, and allocates or returns radio resources below a maximum number N+M for handover calls, in the range of the amount of available radio resources (PRB_Avail).

In operation S120, the resource management system compares an amount of radio resources (PRB_Req) requested by the call with the amount of available radio resources calculated in operation S110.

If the requested amount of radio resources (PRB_Req) is more than the amount of available radio resources (PRB_Avail), allocation of radio resources is impossible, and thus the resource management system rejects call admission and resource allocation for the call.

If the requested amount of radio resources (PRB_Req) is less than the amount of available radio resources (PRB_Avail), the resource management system compares the requested amount of radio resources (PRB_Req) with the amount of radio resources (PRB_New) that are to be allocated to normal calls, in operation S130.

If the requested amount of radio resources (PRB_Req) is less than the amount of radio resources (PRB_New) that are to be allocated to normal calls, the resource management system accepts call admission and resource allocation for a normal call considering the call as the normal call, in operation S140.

If the resource management system accepts the call admission and resource allocation for the normal call in operation S140, the resource management system can determine whether the amount of available radio resources satisfies QoS requested by the call, to finally determine whether or not to perform the call admission and resource allocation for the normal call.

Then, if allocation of radio resources is performed in operation S140, in operation S150, the resource management system subtracts the amount of radio resources allocated to the call from the amount of available radio resources (PRB_Avail) to thus update the amount of available radio resources (PRB_Avail). Also, the resource management system subtracts the amount of radio resources allocated to the call from the amount of radio resources (PRB_New) that are to be allocated to normal calls and the amount of radio resources (PRB_HO) that are to be allocated to handover calls. In the drawing, PRB_Avail = PRB_Avail - K, PRB_New = PRB_New - K, PRB_HO = PRB_HO-K, wherein K represents the amount of radio resources that are to be allocated to each call.

If the amount of radio resources (PRB_Req) requested by the call is more than the amount of radio resources (PRB_New) that are to be allocated to normal calls, the resource management system determines whether the call is a handover call, in operation S160.

If the call is not a handover call, allocation of radio resources is impossible, and thus the resource management system rejects call admission and resources allocation for the call.

If the call is a handover call, the resource management system compares the amount of radio resources (PRB_Req) requested by the call with the amount of radio resources (PRB_HO) that are to be allocated to handover calls, in operation S170.

If the requested amount of radio resources (PRB_Req) is more than the amount of radio resources (PRB_HO) that are to be allocated to handover calls, allocation of radio resources is impossible, and thus the resource allocation system rejects call admission and resource allocation for the call.

If the requested amount of radio resources (PRB_Req) is less than the amount of radio resources (PRB_HO) that are to be allocated to handover calls, the resource management system accepts call admission and resource allocation for the call, in operation S180.

Here, when the call admission and resource allocation for the handover call are performed in operation S180, the resource management system can determine whether the amount of available radio resources satisfies QoS requested by the call, to finally determine whether or not to perform the call admission and resource allocation for the handover call.

After radio resources are allocated to the call in operation S180, in operation S190, the resource management system subtracts the amount of radio resources allocated to the call from the amount of available radio resources (PRB_Avail), to thus update the amount of available radio resources (PRB_Avail).

Also, the resource management system subtracts the amount of radio resources allocated to the call from the amount of radio resources (PRB_New) that are to be allocated to normal calls and the amount of radio resources (PRB_HO) that are to be allocated to handover calls. In the drawing, PRB_Avail = PRB_Avail - K, PRB_New = PRB_New - K, and PRB_HO = PRB_HO - K, wherein K represents the amount of radio resources that are to be allocated to each call.

Meanwhile, according to another embodiment of the present invention, when a call release is requested, the resource management system performs a call release for a normal call or a handover call and returns radio resources allocated to the normal or handover call, in operation S310, and adds the returned amount of radio resources to the amount of available radio resources (PRB_Avail) to update the amount of available radio resources (PRB_Avail), in operation S320. Also, the resource management system adds the returned amount of radio resources to the amount of radio resources (PRB_New) that are to be allocated to normal calls and the amount of radio resources (PRB_HO) that are to be allocated to handover calls. In the drawing, wherein K represents the amount of radio resources allocated to each call.

Therefore, according to the present invention, by effectively performing management of radio resources for a normal call or a handover call on the basis of radio resource usage, it is possible to improve QoS and efficiently use radio resources.

It will be apparent to those skilled in the art that various modifications and variations can be made in the present invention without departing from the scope of the invention. Thus, it is intended that the present invention covers the modifications and variations of this invention provided they come within the scope of the appended claims.

The present invention can be applied to technical fields of managing radio resources and applications thereof.

**Claims**

1. A resource management system in a base station, wherein the resource management is based on radio resource usage, the system comprising:

   a MAC connecting unit (110) adapted to receive present information about an allocated amount of radio resources from a MAC layer which performs scheduling for the radio resources; and
   a radio resource management unit (120) adapted to manage radio resources for each base station cell, on the basis of the present information about the allocated amount of the radio resources,
   wherein the radio resource management unit comprises:

      an allocation rule generator (121) adapted to define a total amount of radio resources and within the total amount of radio resources, an amount N of radio resources that are to be allocated to normal calls within the total amount of radio resources, and an amount N+M of radio resources that are to be allocated to handover calls within the total amount of radio resources;
      an available resource calculator (122) adapted, when a call request is received, to calculate, on the basis of the present information about the allocated amount of radio resources and the total amount of radio resources, an amount of available radio resources by subtracting a product of the amount of occupied radio resources that are to be allocated to a terminal and the number P of terminals capable of being presently serviced simultaneously in a transmission time interval, from the total amount of radio resources,; and

a radio resource processor (123) adapted, when a call request is received, to allocate radio resources below a maximum number N for normal calls, and allocate radio resources below a maximum number N+M for handover calls, within the range of the amount of available radio resources as calculated by the available resource calculator (122),

wherein when a call release is requested, the radio resource processor (123) is adapted to perform call release and resource return for a normal call or a handover call on the call, and to update the amount of available radio resources by adding an amount of returned radio resources to the amount of available radio resources,

wherein the radio resource processor (123) is adapted

to compare an amount of radio resources requested by the call with the amount of available radio resources,

to compare the amount of radio resources requested by the call with the amount of radio resources that are to be allocated to the normal calls if the amount of radio resources requested by the call is less than the amount of available radio resources,

to perform call admission and resource allocation for a normal call if the amount of radio resources requested by the call is less than the amount of radio resources that are to be allocated to the normal calls,

to determine whether the call is a handover call if the amount of radio resources requested by the call is

more than the amount of radio resources that are to be allocated to the normal calls,

to compare the amount of radio resources requested by the call with the amount of radio resources that are to be allocated to the handover calls if the call is a handover call, and

to perform call admission and resource allocation for a handover call if the amount of radio resources requested by the call is less than the amount of radio resources that are to be allocated to the handover calls.

2. The resource management system of claim 1, wherein the allocation rule generator (121) is adapted to calculate a number of receivable calls on the basis of the total amount of radio resources, an amount of radio resources that are to be allocated to normal calls, and the amount of radio resources that are to be allocated to handover calls.

3. The resource management system of claim 1 or 2, wherein the radio resource processor (123) is adapted, when resource allocation for the normal call is performed, to update the amount of available radio resources by subtracting an amount of radio resources allocated to the normal call from the amount of available radio resources.

4. The resource management system of any one of claims 1 to 3, wherein the radio resource processor (123) is adapted, when resource allocation for the handover call is performed, to update the amount of available radio resources by subtracting an amount of radio resources allocated to the handover call from the amount of available radio resources.

5. The resource management system of any one of claims 1 to 4, wherein the radio resource processor (123) is adapted to determine whether a state for the amount of available radio resources satisfies quality of service, QOS, requested by the call before performing the call admission and resource allocation for the normal call or the handover call, and finally to determine whether or not to perform the call admission and resource allocation for the normal call or the handover call.

6. The resource management system of any one of claims 1 to 5, further comprising an Radio Resource Control RRC means connecting unit (130) suitable for receiving a call admission request or a call release request for a normal call or a handover call from an RRC means which adapted to perform processing for a normal call or a handover call, and for transmitting the results in response to the call admission request or the call release request.

7. The resource management system of any one of claims 1 to 5, further comprising an Operation, Administration and Maintenance OAM means connecting unit (140) suitable for receiving information required for an initial operation for resource management control, including the total amount of radio resources, the amount of radio resources that are to be allocated to the normal calls, and the amount of radio resources that are to be allocated to the handover calls, from the OAM means which is adapted to define a standard for providing functions for operations/maintenance/repair of a communication network.

8. A resource management method performed by a base station based on radio resource usage, the method comprising:

receiving present information about an allocated amount of radio resources from a MAC layer by a MAC connecting unit (110);
managing radio resources for each base station cell, on the basis of the present information about the allocated amount of the radio resources by a radio resource management unit (120) that performs:

defining a total amount of radio resources and within the total amount of radio resources, an amount N of radio resources that are to be allocated to normal calls within the total amount of radio resources, and an amount N+M of radio resources that are to be allocated to handover calls within the total amount of radio resources at an allocation rule generator (121);

when a call request is received, calculating (S110) at an available resource calculator (122), on the basis of the present information about the allocated amount of radio resources and the total amount of radio resources, an amount of available radio resources by subtracting a product of an amount of occupied radio resources that are to be allocated to a terminal and a number P of terminals capable of being presently serviced simultaneously in a transmission time interval, from a total amount of radio resources;

at a radio resource processor (123), allocating radio resources below a maximum number N for normal calls, and allocating radio resources below a maximum number N+M for handover calls, within the range of the amount of available radio resources as calculated at the available resource calculator (122);

when a call release is requested, releasing the call, returning radio resources allocated to the call (S310), and updating the amount of available radio resource by adding the amount of returned radio resources to the amount of available radio resources (S320) at the radio resource processor (123);

comparing an amount of radio resources requested by the call with the amount of available radio resources (S120) at the radio resource processor (123);

performing call admission and resource allocation for the call, based on whether the call is a normal call or a handover call and the comparison result at the radio resource processor (123), wherein the performing of the call admission and resource allocation for the call comprises:if the amount of radio resources requested by the call is less than the amount of available radio resources, comparing the amount of radio resources requested by the call with an amount of radio resources that are to be allocated to normal calls (S130);

if the amount of radio resources requested by the call is less than the amount of radio resources that are to be allocated to the normal calls, performing call admission and resource allocation for a normal call on the call (S140); and

if the amount of radio resource requested by the call is more than the amount of radio resources that are to be allocated to the normal calls, determining whether the call is a handover call (S160);

if the call is a handover call, comparing the amount of all radio resources requested by the call with an amount of radio resources that are to be allocated to handover calls (S170);

if the amount of radio resources requested by the call is less than the amount of radio resources that are to be allocated to handover calls, performing call admission and resource allocation for a handover call (S180).

9. The resource management method of claim 8, wherein the performing of the call admission and resource allocation for the call comprises, when resource allocation for the normal call is performed, updating the amount of available radio resources by subtracting an amount of radio resources allocated to the call from the amount of available radio resources (S150).

10. The resource management method of claim 8 or 9, wherein the performing of the call admission and resource allocation for the call further comprises, when resource allocation for the handover call is performed, updating the amount of available radio resources by subtracting an amount of radio resources allocated to the call from the amount of available radio resources (S190).

11. The resource management method of any one of claims 8 to 10, wherein the performing of the call admission and resource allocation for the normal call comprises determining whether a state for the amount of available radio resources satisfies quality of service, QOS, requested by the call, and finally determining whether or not to perform the call admission and resource allocation for the normal call.

12. The resource management method of claim 11, wherein the performing of the call admission and resource allocation for the handover call comprises determining whether the state for the amount of available radio resources satisfies the QoS requested by the call, and finally determining whether or not to perform the call admission and resource allocation for the handover call.

**Patentansprüche**

1. Ressourcenverwaltungssystem in einer Basisstation, wobei die Ressourcenverwaltung auf einer Funkressourcennutzung basiert, wobei das System folgendes umfasst:

eine MAC-Verbindungseinheit (110), die vorliegende Informationen über eine zugeteilte Menge an Funkressourcen von einer MAC-Schicht empfangen kann, die ein Scheduling für die Funkressourcen durchführt; und
eine Funkressourcenverwaltungseinheit (120), die Funkressourcen für jede Basisstationszelle verwalten kann auf der Basis der vorliegenden Informationen über die zugeteilte Menge an Funkressourcen,
wobei die Funkressourcenverwaltungseinheit folgendes umfasst:

einen Zuteilungsregelgenerator (121), der eine Gesamtmenge an Funkressourcen definieren kann, sowie innerhalb der Gesamtmenge an Funkressourcen eine Menge N an Funkressourcen, die normalen Anrufen in der Gesamtmenge an Funkressourcen zuzuteilen sind, und eine Menge N+M an Funkressourcen, die Handover-Anrufen in der Gesamtmenge an Funkressourcen zuzuteilen sind;
einen Rechner (122) für verfügbare Ressourcen, der, wenn eine Rufanforderung empfangen wird, auf der Basis der vorliegenden Informationen über die zugeteilte Menge an Funkressourcen und der Gesamtmenge an Funkressourcen eine Menge an verfügbaren Funkressourcen berechnen kann durch Subtrahieren eines Produkts der Menge belegter Funkressourcen, die einem Endgerät zuzuteilen sind, und der Anzahl P an Endgeräten, die aktuell gleichzeitig innerhalb eines Übermittlungszeitintervalls bedient werden können, von der Gesamtmenge an Funkressourcen; und
einen Funkressourcenprozessor (123), der, wenn eine Rufanforderung empfangen wird, Funkressourcen unterhalb einer maximalen Anzahl N für normale Anrufe zuteilen kann, und der Funkressourcen unterhalb einer maximalen Anzahl N+M für Handover-Anrufe zuteilen kann, innerhalb des Bereichs der Menge an verfügbaren Funkressourcen gemäß der Berechnung durch den Rechner (122) für verfügbare Ressourcen,
wobei, wenn eine Rufauslösung angefordert wird, der Funkressourcenprozessor (123) eine Rufauslösung und eine Ressourcenrückführung für einen normalen Anruf oder einen Handover-Anruf an dem Anruf durchführen kann, und die Menge an verfügbaren Funkressourcen aktualisieren kann durch Addieren einer Menge zurückgeführter Funkressourcen zu der Menge an verfügbaren Funkressourcen,
wobei der Funkressourcenprozessor (123) folgendes ausführen kann:

Vergleichen einer Menge der von dem Anruf angeforderten Funkressourcen mit der Menge an verfügbaren Funkressourcen,
Vergleichen der Menge der von dem Anruf angeforderten Funkressourcen mit der Menge an Funkressourcen, die den normalen Anrufen zuzuteilen sind, wenn die Menge der von dem Anruf angeforderten Funkressourcen kleiner ist als die Menge an verfügbaren Funkressourcen,
Durchführen einer Rufzulassung und Ressourcenzuteilung für einen normalen Anruf, wenn die Menge der von dem Anruf angeforderten Funkressourcen kleiner ist als die Menge an Funkressourcen, die den normalen Anrufen zuzuteilen ist,
Bestimmen, ob der Anruf ein Handover-Anruf ist, wenn die Menge der von dem Anruf angeforderten Funkressourcen größer ist als die Menge an Funkressourcen, die den normalen Anrufen zuzuteilen ist,
Vergleichen der Menge der von dem Anruf angeforderten Funkressourcen mit der Menge der den Handover-Anrufen zuzuteilenden Menge an Funkressourcen, wenn der Anruf ein Handover-Anruf ist, und
Durchführen einer Rufzulassung und Ressourcenzuteilung für einen Handover-Anruf, wenn die Menge der von dem Anruf angeforderten Funkressourcen kleiner ist als die Menge an Funkressourcen, die den Handover-Anrufen zuzuteilen ist.

2.  Ressourcenverwaltungssystem nach Anspruch 1, wobei der Zuteilungsregelgenerator (121) eine Anzahl empfangbarer Anrufe auf der Basis der Gesamtmenge an Funkressourcen, einer Menge an normalen Anrufen zuzuteilenden Funkressourcen und der Menge an Funkressourcen, die Handover-Anrufen zuzuteilen sind, berechnen kann.

3.  Ressourcenverwaltungssystem nach Anspruch 1 oder 2, wobei der Funkressourcenprozessor (123), wenn eine Ressourcenzuteilung für den normalen Anruf durchgeführt wird, die Menge an verfügbaren Funkressourcen aktualisieren kann durch Subtrahieren einer Menge an dem normalen Anruf zugeteilten Funkressourcen von der Menge an verfügbaren Funkressourcen.

4. Ressourcenverwaltungssystem nach einem der Ansprüche 1 bis 3, wobei der Funkressourcenprozessor (123), wenn eine Ressourcenzuteilung für den Handover-Anruf durchgeführt wird, die Menge an verfügbaren Ressourcen aktualisieren kann durch Subtrahieren einer Menge an dem Handover-Anruf zugeteilten Funkressourcen von der Menge an verfügbaren Funkressourcen.

5. Ressourcenverwaltungssystem nach einem der Ansprüche 1 bis 4, wobei der Funkressourcenprozessor (123) bestimmen kann, ob ein Zustand für die Menge an verfügbaren Funkressourcen eine durch den Anruf angeforderte Dienstgüte, QOS, erfüllt, bevor die Rufzulassung und Ressourcenzuteilung für den normalen Anruf oder den Handover-Anruf durchgeführt wird, und wobei er schließlich bestimmen kann, ob die Rufzulassung und Ressourcenzuteilung für den normalen Anruf oder den Handover-Anruf durchgeführt wird.

6. Ressourcenverwaltungssystem nach einem der Ansprüche 1 bis 5, ferner umfassend eine Radio Resource Control (RRC)-Einrichtungs-Verbindungseinheit (130), die eine Rufzulassungsanforderung oder eine Rufauslösungsanforderung für einen normalen Anruf oder einen Handover-Anruf von einer RRC-Einrichtung empfangen kann, welche die Verarbeitung für einen normalen Anruf oder einen Handover-Anruf durchführen kann, sowie zum Übermitteln der Ergebnisse als Reaktion auf die Rufzulassungsanforderung oder die Rufauslösungsanforderung.

7. Ressourcenverwaltungssystem nach einem der Ansprüche 1 bis 5, ferner umfassend eine Operation, Administration and Maintenance (OAM)-Einrichtungs-Verbindungseinheit (140), die erforderliche Informationen für eine erste Operation zur Ressourcenverwaltungssteuerung empfangen kann, darunter die Gesamtmenge an Funkressourcen, die Menge an Funkressourcen, die den normalen Anrufen zuzuteilen sind, und die Menge an Funkressourcen, die den Handover-Anrufen zuzuteilen sind, von der OAM-Einrichtung, die einen Standard definieren kann zur Bereitstellung von Funktionen für Betrieb/Wartung/Instandsetzung eines Kommunikationsnetzes.

8. Ressourcenverwaltungsverfahren, das von einer Basisstation auf der Basis einer Funkressourcennutzung durchgeführt wird, wobei das Verfahren folgendes umfasst:

   Empfangen vorliegender Informationen über eine zugeteilte Menge an Funkressourcen von einer MAC-Schichtdurch durch eine MAC-Verbindungseinheit (110);
   Verwalten der Funkressourcen für jede Basisstationszelle auf der Basis der vorliegenden Informationen über die zugeteilte Menge an Funkressourcen durch eine Funkressourcenverwaltungseinheit (120), die folgendes durchführt:

   Definieren einer Gesamtmenge an Funkressourcen sowie innerhalb der Gesamtmenge an Funkressourcen einer Menge N an Funkressourcen, die normalen Anrufen in der Gesamtmenge an Funkressourcen zuzuteilen sind, und einer Menge N+M an Funkressourcen, die Handover-Anrufen in der Gesamtmenge an Funkressourcen zuzuteilen sind, an einem Zuteilungsregelgenerator (121);
   wenn eine Rufanforderung empfangen wird, an einem Rechner (122) für verfügbare Ressourcen auf der Basis der vorliegenden Informationen über die zugeteilte Menge an Funkressourcen und der Gesamtmenge an Funkressourcen Berechnen (S110) einer Menge verfügbarer Funkressourcen durch Subtrahieren eines Produkts einer Menge belegter Funkressourcen, die einem Endgerät zuzuteilen sind, und einer Anzahl P an Endgeräten, die aktuell gleichzeitig innerhalb eines Übermittlungszeitintervalls bedient werden können, von einer Gesamtmenge an Funkressourcen; und
   an einem Funkressourcenprozessor (123), Zuteilen von Funkressourcen unterhalb einer maximalen Anzahl N für normale Anrufe, und Zuteilen von Funkressourcen unterhalb einer maximalen Anzahl N+M für Handover-Anrufe, innerhalb des Bereichs der Menge an verfügbaren Funkressourcen gemäß der Berechnung an dem Rechner (122) für verfügbare Ressourcen;
   wenn eine Rufauslösung angefordert wird, Auslösen des Anrufs, Zurückführen der dem Anruf (S310) zugeteilten Funkressourcen, und Aktualisieren der Menge verfügbarer Funkressourcen durch Addieren der Menge zurückgeführter Funkressourcen zu der Menge an verfügbaren Funkressourcen (S320) an dem Funkressourcenprozessor (123);
   Vergleichen einer Menge der von dem Anruf angeforderten Funkressourcen mit der Menge an verfügbaren Funkressourcen (S120) an dem Funkressourcenprozessor (123);
   Durchführen einer Rufzulassung und Ressourcenzuteilung für den Anruf darauf basierend, ob der Anruf ein normaler Anruf oder ein Handover-Anruf ist und auf dem Vergleichsergebnis an dem Funkressourcenprozessor (123);

wobei das Durchführen der Rufzulassung und Ressourcenzuteilung für den Anruf folgendes umfasst: wenn die Menge der von dem Anruf angeforderten Funkressourcen kleiner ist als die Menge an verfügbaren Funkressourcen, Vergleichen der Menge an durch den Anruf angeforderten Funkressourcen mit einer Menge an Funkressourcen, die normalen Anrufen zuzuteilen sind (S130);

wenn die Menge der von dem Anruf angeforderten Funkressourcen kleiner ist als die Menge an Funkressourcen, die den normalen Anrufen zuzuteilen ist, Durchführen der Rufzulassung und Ressourcenzuteilung für einen normalen Anruf an dem Anruf (S140); und

wenn die Menge der von dem Anruf angeforderten Funkressourcen größer ist als die Menge an Funkressourcen, die den normalen Anrufen zuzuteilen ist, Bestimmen, ob der Anruf ein Handover-Anruf ist (S160);

wenn der Anruf ein Handover-Anruf ist, Vergleichen der Menge aller von dem Anruf angeforderten Funkressourcen mit der Menge der den Handover-Anrufen zuzuteilenden Menge an Funkressourcen (S170);

wenn die Menge der von dem Anruf angeforderten Funkressourcen kleiner ist als die Menge an Funkressourcen, die den Handover-Anrufen zuzuteilen ist, Durchführen einer Rufzulassung und Ressourcenzuteilung für einen Handover-Anruf (S180).

9. Ressourcenverwaltungsverfahren nach Anspruch 8, wobei das Durchführen einer Rufzulassung und Ressourcenzuteilung für den Anruf, wenn eine Ressourcenzuteilung für den normalen Anruf durchgeführt wird, das Aktualisieren der Menge an verfügbaren Funkressourcen umfasst, durch Subtrahieren einer Menge an Funkressourcen, die dem Anruf zugeteilt sind, von der Menge an verfügbaren Funkressourcen (S150).

10. Ressourcenverwaltungsverfahren nach Anspruch 8 oder 9, wobei das Durchführen einer Rufzulassung und Ressourcenzuteilung für den Anruf ferner folgendes umfasst:

wenn eine Ressourcenzuteilung für den Handover-Anruf durchgeführt wird, das Aktualisieren der Menge an verfügbaren Funkressourcen durch Subtrahieren einer Menge an Funkressourcen, die dem Anruf zugeteilt sind, von der Menge an verfügbaren Funkressourcen (S190).

11. Ressourcenverwaltungsverfahren nach einem der Ansprüche 8 bis 10, wobei das Durchführen einer Rufzulassung und Ressourcenzuteilung für den normalen Anruf das Bestimmen umfasst, ob ein Zustand für die Menge an verfügbaren Funkressourcen eine durch den Anruf angeforderte Dienstgüte, QOS, erfüllt, und schließlich Bestimmen, ob die Rufzulassung und Ressourcenzuteilung für den normalen Anruf durchgeführt wird.

12. Ressourcenverwaltungsverfahren nach Anspruch 11, wobei das Durchführen einer Rufzulassung und Ressourcenzuteilung für den Handover-Anruf das Bestimmen umfasst, ob der Zustand für die Menge an verfügbaren Funkressourcen die durch den Anruf angeforderte QoS erfüllt, und schließlich Bestimmen, ob die Rufzulassung und Ressourcenzuteilung für den Handover-Anruf durchgeführt wird.

## Revendications

1. Système de gestion de ressources dans une station de base, la gestion de ressources étant basée sur l'utilisation de ressources radio, le système comprenant :

une unité de connexion MAC (110) conçue pour recevoir des informations actuelles concernant une quantité allouée de ressources radio provenant d'une couche MAC qui exécute la planification pour les ressources radio ; et une unité de gestion de ressources radio (120) conçue pour gérer les ressources radio pour chaque cellule de station de base, sur la base des informations actuelles concernant la quantité allouée de ressources radio, l'unité de gestion de ressources radio comprenant :

un générateur de règles de répartition (121) conçu pour définir une quantité totale de ressources radio et dans la quantité totale de ressources radio, une quantité N de ressources radio qui doivent être allouées à des appels normaux dans la quantité totale de ressources radio, et une quantité N+M de ressources radio qui doivent être allouées à des appels de transfert dans la quantité totale de ressources radio ; un calculateur de ressources disponibles (122) conçu, lorsqu'une demande d'appel est reçue, pour calculer, sur la base des informations actuelles concernant la quantité allouée de ressources radio et la quantité totale de ressources radio, une quantité de ressources radio disponibles en soustrayant un produit de la quantité de ressources radio occupées qui doivent être allouées à un terminal et le nombre P de terminaux pouvant actuellement être desservis simultanément dans un intervalle de temps de transmission, de la quantité totale de ressources radio ; et

un processeur de ressources radio (123) conçu, lorsqu'une demande d'appel est reçue, pour allouer des ressources radio en dessous d'un nombre maximal N pour des appels normaux, et allouer des ressources radio en dessous d'un nombre maximal N+M pour des appels de transfert, dans la plage de la quantité de ressources radio disponibles comme calculé par le calculateur de ressources disponibles (122),

lorsqu'une libération d'appel est demandée, le processeur de ressources radio (123) étant conçu pour exécuter une libération d'appel et un renvoi de ressources pour un appel normal ou un appel de transfert sur l'appel, et pour mettre à jour la quantité de ressources radio disponibles en ajoutant une quantité de ressources radio renvoyées à la quantité de ressources radio disponibles,

le processeur de ressources radio (123) étant conçu

pour comparer une quantité de ressources radio demandées par l'appel avec la quantité de ressources radio disponibles,

pour comparer la quantité de ressources radio demandées par l'appel avec la quantité de ressources radio qui doivent être allouées aux appels normaux si la quantité de ressources radio demandées par l'appel est inférieure à la quantité de ressources radio disponibles,

pour exécuter une admission d'appel et une allocation de ressources pour un appel normal si la quantité de ressources radio demandées par l'appel est inférieure à la quantité de ressources radio qui doivent être allouées aux appels normaux,

pour déterminer si l'appel est un appel de transfert si la quantité de ressources radio demandées par l'appel est supérieure à la quantité de ressources radio qui doivent être allouées aux appels normaux,

pour comparer la quantité de ressources radio demandées par l'appel avec la quantité de ressources radio qui doivent être allouées aux appels de transfert si l'appel est un appel de transfert, et

pour exécuter une admission d'appel et une allocation de ressources pour un appel de transfert si la quantité de ressources radio demandées par l'appel est inférieure à la quantité de ressources radio qui doivent être allouées aux appels de transfert,

2. Système de gestion de ressources selon la revendication 1, le générateur de règles d'allocation (121) étant conçu pour calculer un nombre d'appels pouvant être reçus sur la base de la quantité totale de ressources radio, d'une quantité de ressources radio qui doivent être allouées aux appels normaux, et de la quantité de ressources radio qui doivent être allouées aux appels de transfert.

3. Système de gestion de ressources selon la revendication 1 ou 2, le processeur de ressources radio (123) étant conçu, lorsque l'allocation de ressources pour l'appel normal est exécutée, pour mettre à jour la quantité de ressources radio disponibles en soustrayant une quantité de ressources radio allouées à l'appel normal de la quantité de ressources radio disponibles.

4. Système de gestion de ressources selon l'une quelconque des revendications 1 à 3, le processeur de ressources radio (123) étant conçu, lorsque l'allocation radio pour l'appel de transfert est exécutée, pour mettre à jour la quantité de ressources radio disponibles en soustrayant une quantité de ressources radio allouées à l'appel de transfert de la quantité de ressources radio disponibles.

5. Système de gestion de ressources selon l'une quelconque des revendications 1 à 4, le processeur de ressources radio (123) étant conçu pour déterminer si un état pour la quantité de ressources radio disponibles satisfait à la qualité de service, QOS, demandée par l'appel avant d'exécuter l'admission d'appel et l'allocation de ressources pour l'appel normal ou l'appel de transfert, et enfin pour déterminer si l'on doit ou non exécuter l'admission d'appel et l'allocation de ressources pour l'appel normal ou l'appel de transfert.

6. Système de gestion de ressources selon l'une quelconque des revendications 1 à 5, comprenant en outre une unité de connexion (130) de moyen de commande de ressources radio RRC conçue pour recevoir une demande d'admission d'appel ou une demande de libération d'appel pour un appel normal ou un appel de transfert à partir d'un moyen RRC qui est conçu pour exécuter un traitement pour un appel normal ou un appel de transfert, et pour transmettre les résultats en réponse à la demande d'admission d'appel ou la demande de libération d'appel.

7. Système de gestion de ressources selon l'une quelconque des revendications 1 à 5, comprenant en outre une unité de connexion (140) de moyen d'exploitation, d'administration et de maintenance OAM appropriée pour recevoir les informations requises pour une opération initiale de commande de gestion de ressources, y compris la quantité totale de ressources radio, la quantité de ressources radio qui doivent être allouées aux appels normaux, et la quantité de ressources radio qui doivent être allouées aux appels de transfert, à partir du moyen OAM qui est conçu pour définir une norme pour fournir des fonctions d'exploitation/d'entretien/de réparation d'un réseau de communication.

8. Procédé de gestion de ressources exécuté par une station de base sur la base de l'utilisation de ressources radio, le procédé comprenant les étapes :

réception d'informations actuelles concernant une quantité allouée de ressources radio provenant d'une couche MAC par une unité de connexion MAC (110) ;
gestion de ressources radio pour chaque cellule de station de base, sur la base des informations actuelles concernant la quantité allouée des ressources radio par une unité de gestion de ressources radio (120) qui effectue les étapes :

définition d'une quantité totale de ressources radio et dans la quantité totale de ressources radio, d'une quantité N de ressources radio qui doivent être allouées à des appels normaux dans la quantité totale de ressources radio, et d'une quantité N+M de ressources radio qui doivent être allouées à des appels de transfert dans la quantité totale de ressources radio au niveau d'un générateur de règles d'allocation (121) ;
lorsqu'une demande d'appel est reçue, calcul (S110) au niveau d'un calculateur de ressources disponibles (122), sur la base des informations actuelles concernant la quantité allouée de ressources radio et la quantité totale de ressources radio, d'une quantité de ressources radio disponibles en soustrayant un produit d'une quantité de ressources radio occupées qui doivent être allouées à un terminal et un nombre P de terminaux pouvant actuellement être desservis simultanément dans un intervalle de temps de transmission, de la quantité totale de ressources radio ;
au niveau d'un processeur de ressources radio (123), allocation de ressources radio en dessous d'un nombre maximal N pour des appels normaux, et allocation de ressources radio en dessous d'un nombre maximal N+M pour des appels de transfert, dans la plage de la quantité de ressources radio disponibles comme calculé au niveau du calculateur de ressources disponibles (122) ;
lorsqu'une libération d'appel est demandée, libération de l'appel, renvoi des ressources radio allouées à l'appel (S310) et mise à jour la quantité de ressources radio disponibles en ajoutant la quantité de ressources radio renvoyées à la quantité de ressources radio disponibles (S320) au niveau du processeur de ressources radio (123) ;
comparaison d'une quantité de ressources radio demandées par l'appel avec la quantité de ressources radio disponibles (S120) au niveau du processeur de ressources radio (123) ;
exécution de l'admission d'appel et de l'allocation de ressources pour l'appel, selon qu'il s'agit d'un appel normal ou d'un appel de transfert et le résultat de la comparaison au niveau du processeur de ressources radio (123),
l'exécution de l'admission d'appel et de l'allocation de ressources pour l'appel comprenant les étapes : si la quantité de ressources radio demandées par l'appel est inférieure à la quantité de ressources radio disponibles, comparaison de la quantité de ressources radio demandées par l'appel avec une quantité de ressources radio qui doivent être allouées aux appels normaux (S130) ;
si la quantité de ressources radio demandées par l'appel est inférieure à la quantité de ressources radio qui doivent être allouées aux appels normaux, exécution de l'admission d'appel et de l'allocation de ressources pour un appel normal sur l'appel (S140) ; et
si la quantité de ressources radio demandées par l'appel est supérieure à la quantité de ressources radio qui doivent être allouées aux appels normaux, détermination du fait de savoir si l'appel est un appel de transfert (S160) ;
si l'appel est un appel de transfert, comparaison de la quantité de toutes les ressources radio demandées par l'appel avec la quantité de ressources radio qui doivent être allouées aux appels de transfert (S170) ;
si la quantité de ressources radio demandées par l'appel est inférieure à la quantité de ressources radio qui doivent être allouées aux appels de transfert, exécution de l'admission d'appel et de l'allocation de ressources pour un appel de transfert (S180).

9.  Procédé de gestion de ressources selon la revendication 8, l'exécution de l'admission d'appel et de l'allocation de ressources pour l'appel comprenant l'étape, lorsque l'allocation de ressources pour l'appel normal est exécutée, de mise à jour de la quantité de ressources radio disponibles en soustrayant une quantité de ressources radio allouées à l'appel de la quantité de ressources radio disponibles (S150).

10. Procédé de gestion de ressources selon la revendication 8 ou 9, l'exécution de l'admission d'appel et de l'allocation de ressources pour l'appel comprenant en outre l'étape,
    lorsque l'allocation de ressources pour l'appel de transfert est exécutée, mise à jour de la quantité de ressources radio disponibles en soustrayant une quantité de ressources radio allouées à l'appel de la quantité de ressources radio disponibles (S190),

11. Procédé de gestion de ressources selon l'une quelconque des revendications 8 à 10,
    l'exécution de l'admission d'appel et de l'allocation de ressources pour l'appel normal comprenant les étapes de détermination du fait de savoir si un état pour la quantité de ressources radio disponibles satisfait à la qualité de service, QOS, demandée par l'appel, et enfin de détermination du fait de savoir s'il convient d'exécuter l'admission d'appel et l'allocation de ressources pour l'appel normal.

12. Procédé de gestion de ressources selon la revendication 11, l'exécution de l'admission d'appel et de l'allocation de ressources pour l'appel de transfert comprenant les étapes de détermination du fait de savoir si l'état pour la quantité de ressources radio disponibles satisfait à la QoS demandée par l'appel, et enfin de détermination du fait de savoir s'il convient d'exécuter l'admission d'appel et l'allocation de ressources pour l'appel de transfert.

FIG.1

MAC LAYER → | MAC CONNECTING UNIT | ← → | ALLOCATION RULE GENERATOR |
110                                    121

RRC MEANS → | RRC MEANS CONNECTING UNIT | ← → | AVAILABLE RESOURCE CALCULATOR |
130                                    122        120

OAM MEANS → | OAM MEANS CONNECTING UNIT | → | RADIO RESOURCE PROCESSOR |
140                                    123

## FIG.2

START

CALL REQUEST?

CALL RELEASE ?

OUTPUT UNDEFINED MESSAGE

END

CALCULATE AMOUNT OF AVAILABLE RADIO RADIO RESOURCES (PRB_Avail) — S110

$PRB\_Req < PRB\_Avail?$ — S120

$PRB\_Req < PRB\_New?$ — S130

PERFORM CALL RELEASE AND RESOURCE RETURN — S310

$PRB\_Avail = PRB\_Avail + K, PRB\_New = PRB\_New + K, PRB\_HO = PRB\_HO + K$ — S320

handover ? — S160

$PRB\_Req < PRB\_HO?$ — S170

CALL ADMISSION AND RESOURCE ALLOCATION FOR HANDOVER CALL — S180

CALL ADMISSION AND RESOURCE ALLOCATION FOR NORMAL CALL — S140

$PRB\_Avail = PRB\_Avail - K, PRB\_New = PRB\_New - K, PRB\_HO = PRB\_HO - K$ — S150, S190

END

REJECT CALL ADMISSION AND RESOURCE ALLOCATION

A

# FIG.3

```
                    ┌──────────────┐
                    │    START     │
                    └──────┬───────┘
                           ▼
┌─────────────────────────────────────────────────────────────┐
│  RECEIVE TOTAL AMOUNT OF RADIO RESOURCES(PRB_Tot), AMOUNT    │
│  OF RADIO RESOURCES THAT ARE TO BE ALLOCATED TO NORMAL CALLS,│
│  AND AMOUNT OF RADIO RESOURCES THAT ARE TO BE ALLOCATED TO   │
│  HANDOVER CALLS, AND CALCULATE NUMBER OF RECEIVABLE CALLS    │
└─────────────────────────────┬───────────────────────────────┘
                              │                          S210
                              ▼
┌─────────────────────────────────────────────────────────────┐
│  SET N RADIO RESOURCES TO NORMAL CALL AND N+M RADIO RESOURCES│
│  TO HANDOVER CALL, IN RANGE OF NUMBER OF RECEIVABLE CALLS    │
└─────────────────────────────┬───────────────────────────────┘
                              │                          S220
                              ▼
┌─────────────────────────────────────────────────────────────┐
│       AMOUNT OF AVAILABLE RADIO RESOURCES(PRB_Avail)         │
│              = PRB_Tot   PRB_Alloc x P                       │
└─────────────────────────────┬───────────────────────────────┘
                              │                          S230
                              ▼
                    ┌──────────────┐
                    │     END      │
                    └──────────────┘
```

# FIG.4

```
   RRC MEANS                                    RESOURCE
                                          MANAGEMENT SYSTEM
      │                                          │
      │  ┌────────────────────────────────────┐  │
      │  │      *IN CASE OF NORMAL CALL       │  │
      │  │                                    │  │
      │  │       rrmHnd_Ermb_Request          │  │
      │  │────────(CallType, Class)──────────▶│  │
      │  │                                    │  │
      │  │◀───OK/NOK=rrmHnd_Ermb_Request──────│  │
      │  └────────────────────────────────────┘  │
      │                                          │
      │  ┌────────────────────────────────────┐  │
      │  │     *IN CASE OF HANDOVER CALL      │  │
      │  │                                    │  │
      │  │      rrmHnd_Ermb_HORequest         │  │
      │  │────────(CallType, Class)──────────▶│  │
      │  │                                    │  │
      │  │◀───OK/NOK=Ermb_HORequest───────────│  │
      │  └────────────────────────────────────┘  │
      │                                          │
```

# FIG.5

```
        RRC MEANS                           RESOURCE
                                    MANAGEMENT SYSTEM

    ┌─────────────────────────────────────────────────┐
    │   *IN CASE OF NORMAL CALL RELEASE                │
    │                                                   │
    │   rrmHndFn_Ermb_RelResourceRequest                │
    │              (UEId, RbId)            ──────────▶  │
    │              OK/NOK=                               │
    │   rrmHndFn_Ermb_RelResourceRequest()  ◀────────   │
    └─────────────────────────────────────────────────┘

    ┌─────────────────────────────────────────────────┐
    │   *IN CASE OF HANDOVER CALL RELEASE              │
    │                                                   │
    │   rrmHndFn_Ermb_HORelResourceRequest              │
    │              (UeId, RbId)           ──────────▶   │
    │              OK/NOK=                               │
    │   rrmHndFn_Ermb_HORelResourceRequest() ◀────────  │
    └─────────────────────────────────────────────────┘
```

# FIG.6

```
    MAC LAYER              RESOURCE              OAM MEANS
                     MANAGEMENT SYSTEM

                          getERMBConf()          ──────────▶

                          getERMBConf
                    (PRB_Tot, PRB_New, PRB_HO)   ◀──────────

       rrmHndFn_Ermb_RbControl
    ◀──────  (interval)

       rrmHndFn_Ermb_RbReport
    ──────▶  (occupiedPRB)
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005089003A1 A
- US 2003037146 A1
- US 20030206537 A1

**Non-patent literature cited in the description**

- **CHI-CHAO CHAO.** Connection Admission Control for Mobile Multiple-Class Personal Communications Network. *International Conference on Communication,* 08 June 1997